# EUROPÄISCHE PATENTSCHRIFT

(11) **EP 1 754 549 B1**
(45) Veröffentlichungstag und Bekanntmachung des Hinweises auf die Patenterteilung: **05.10.2011**
(21) Anmeldenummer: 06014524.0
(22) Anmeldetag: 13.07.2006
(51) Int. Cl.: B07C 5/12, B07C 5/36, B07C 5/38

(54) **Verfahren und Anlage zum Sortieren von Flaschen**
Method and apparatus for sorting bottles
Méthode et appareil de tri des bouteilles

(30) Priorität: 17.08.2005 DE 102005038821
(43) Veröffentlichungstag der Anmeldung: 21.02.2007
(73) Patentinhaber: Eisenmann AG, 71032 Böblingen (DE)
(72) Erfinder: Starz, Reiner, 71263 Weil der Stadt (DE); Findeklee, Martin, 59823 Arnsberg (DE)
(74) Vertreter: Ostertag, Ulrich

(56) Entgegenhaltungen:
- EP-A- 0 972 730
- DE-A1- 10 353 109
- DE-U1- 20 006 059
- US-A- 4 651 879

## Beschreibung

Die Erfindung betrifft ein Verfahren zum Sortieren von Flaschen nach dem Oberbegriff des Patentanspruchs 1 sowie eine Anlage zum Sortieren von Flaschen nach dem Oberbegriff des Patentanspruchs 8.

Das in vielen Ländern der Welt geltende Pfandsystem für Getränkeflaschen bringt es mit sich, dass große Anzahlen von Flaschen zu den Abfüllern zurückgebracht werden. Dabei ist es selbstverständlich nicht gewährleistet, dass alle Flaschen von dem jeweiligen Abfüller stammen. Da eine Normung von Getränkeflaschen nicht oder nur sehr unvollständig vorhanden ist, müssen die zurückgegebenen Flaschen nach Flaschentypen sortiert und nicht erkannte oder beschädigte Flaschen ausgesondert werden.

In vielen Fällen geschieht diese Sortierarbeit bisher noch von Werkern, die die Flaschentypen visuell erkennen und die Flaschen von Hand entsprechenden Sortierflächen oder Sortierbehältern zuführen. Es sind jedoch auch bereits automatische Verfahren und Anlagen ähnlich denen der eingangs genannten Art bekannt, bei welchen die Erkennung des Flaschentypes, im allgemeinen noch innerhalb des Kastens, durch eine oder mehrere Kameras erfolgt. Jede Kamera betrachtet die Flaschen von oben. Das dabei gewonnene Bild der Flasche wird von einer Bilderkennungseinrichtung ausgewertet, die - nach in ihr abgespeicherten Vorlagen - den jeweiligen Flaschentyp erkennt. Entsprechend dieser Auswertung werden die Flaschen, deren Position innerhalb der Kästen bekannt ist, von einer Greifeinrichtung erfasst und einer entsprechenden, diesem Flaschentyp zugeordneten Sortierfläche zugeführt.

Bei diesem bekannten Verfahren bzw. dieser bekannten Anlage ist jedoch die Flaschenerkennung nicht sehr zuverlässig, so dass es zu Fehlsortierungen in größerem Ausmaße kommen kann.

Aus der DE 103 53 109 A1 ist ein Verfahren sowie eine Anlage der eingangs genannten Art bekannt geworden.

Dort werden Flaschen, welche unsortiert in Kästen untergebracht sind, in den Bereich einer Entnahmeeinrichtung gefördert, wo ein Greifkopf mittels Greifelementen alle Flaschen entnimmt und mit ihnen senkrecht zur Förderrichtung bis zu einer Prüfeinrichtung zur Identifizierung der Flaschen verfährt. Der Prüfeinrichtung ist eine Beabstandungseinrichtung zugeordnet. Nachdem die Reihen von Flaschen einen größeren Abstand eingenommen haben, wird jede einzelne Flasche von der Seite mittels einer Kameraeinrichtung begutachtet; die entsprechenden Informationen werden positionsgerecht gespeichert. Sie stehen für einen nachfolgenden Sortiervorgang zur Verfügung. Anschließend werden die identifizierten Flaschen wieder in die leeren Kästen eingesetzt, und zwar genau in der gleichen Anordnung, wie sie ursprünglich waren.

Alternativ können die Flaschen auch unmittelbar nach der Prüfungseinrichtung sortiert werden, jedoch gibt diese Druckschrift hierzu keine Details an.

Nachteilig bei dieser bekannten Lösung ist, dass eine Steigerung der Sortierleistung nur in sehr begrenztem Umfang möglich ist.

Aufgabe der vorligenden Erfindung ist es, ein Verfahren und eine Anlage der eingangs genannten Art so auszugestalten, dass mit hohen Durchsatzraten eine zuverlässige Erkennung verschiedener Flaschentypen möglich ist.

Diese Aufgabe wird, was das Verfahren angeht, durch ein Verfahren mit den im Anspruch 1 angegebenen Merkmalen gelöst.

Die Erfindung fußt, wie im Stand der Technik an sich bekannt, auf der Erkenntnis, dass die Erkennung der unterschiedlichen Flaschentypen leichter fällt, wenn deren Form von der Seite betrachtet wird. Hier sind die Formunterschiede sehr viel größer als bei einer Betrachtung von oben. So sind in der Seitenansicht nicht nur die Höhenunterschiede der unterschiedlichen Flaschen sondern auch die Linienführung des Flaschenkorpus besser erkennbar. In bestimmten Fällen ist es auch möglich, Firmenschriftzüge, die an den Flaschenseitenwänden angebracht sind, oder Farben zu erkennen. Auch die Unversehrtheit der Flaschen ist leichter verifizierbar als beim Stande der Technik; so sind abgesprengte Flaschenböden ohne weiteres feststellbar. Die deutlichen Unterschiede in der Seitenansicht der Flasche erleichtern die Funktion der Bilderkennungseinrichtung erheblich, so dass sehr zuverlässige Ergebnisse erzielt werden können.

Damit eine Betrachtung der Flaschen von der Seite möglich ist, müssen diese zur Erkennung aus den Kästen, in denen sie zugefördert werden, herausgenommen und zunächst auf einen solchen Abstand gebracht werden, dass mindestens eine Kamera zwischen die einzelnen Flaschen so weit eindringen kann, dass eine Betrachtung von der Seite her möglich ist, wie das ebenfalls im Stand der Technik bekannt ist.

Erfindungsgemäß werden die Flaschen nach der Entnahme aus den Kästen kontinuierlich in einer eine geschlossene Kurve bildenden Elektrohängebahn bewegt. Dadurch werden die Flaschen dauernd in Bewegung gehalten; Stauungseffekte werden vermieden. Durch Erhöhung der Fördergeschwindigkeit der Elektrohängebahn lässt sich eine Durchsatzerhöhung auf einfache Weise erzielen.

Eine weitere Durchsatzerhöhung erfolgt erfindungsgemäß dadurch, dass die Flaschen im Anschluss an deren Typisierung sortenrichtig auf jeweils zugeordneten Sortierflächen abgelegt werden. Dadurch kann die Weiterbehandlung der Flaschen räumlich und zeitlich parallel erfolgen. Zeitliche Engpässe bei der Weiterbehandlung werden so zuverlässig vermieden.

Zweckmäßigerweise werden die Flaschen den Kästen in Reihen entnommen und die Reihen von Flaschen auf den erforderlichen Abstand gebracht, wobei in jedem Zwieine Kamera positioniert wird. Diese Verfahrensvariante ist deshalb besonders günstig, weil die Flaschen in den Gefachen der Kästen ohnehin schon in Reihen angeordnet sind, die beim Herausheben beibehalten werden können, und weil es nicht erforderlich ist, die Flaschen in allen seitlichen Richtungen in einen größeren Abstand voneinander zu bringen. Es genügt vielmehr, wenn die Flaschen nur von einer Seite her von der Kamera betrachtet werden können.

Zweckmäßig ist, dass die mindestens eine Kamera beim Vorbeiführen der Flaschen stillsteht. Die Bilderfassung kann so rasch geschehen, dass eine Mitbewegung der Kamera beim Vorbeiführen der Flaschen nicht erforderlich ist.

Im allgemeinen befinden sich unter den so geförderten Flaschen auch solche, die einem der Bilderkennungseinrichtung nicht bekannten Typ entsprechen. Andere Flaschen sind beschädigt und besitzen daher ebenfalls nicht dasjenige Erscheinungsbild, das die Bilderkennungseinrichtung abgespeichert hat. Diese nicht erkannten oder beschädigten Flaschen sollten einer besonderen Ablagefläche zugeführt werden können.

Bevorzugt wird, wenn die Flaschen während der Herstellung des notwendigen Abstandes zwischen ihnen und während der Betrachtung durch die mindestens eine Kamera kontinuierlich in einer Förderrichtung bewegt werden. Hierdurch wird der Durchsatz der Flaschen, die sortiert werden können, erhöht.

Zweckmäßigerweise werden mindestens zwei Reihen von Flaschen gebildet, die dann an mindestens zwei stationären Kameras vorbeigeführt werden. Auch diese Maßnahme erhöht den Durchsatz, der mit dem erfindungsgemäßen Verfahren erzielt werden kann.

Schließlich empfiehlt es sich, vor der Entnahme der Flaschen die Kästen zu Pulks zusammenzusetzen, die jeweils eine Mehrzahl von Kästen enthalten. So läßt sich der apparative Aufwand zur Durchführung des Verfahrens verringern und erneut die Zahl von Flaschen, die in der Zeiteinheit sortiert werden können, vergrößern.

Die obige Aufgabe wird, was die Anlage angeht, durch eine Anlage mit den Merkmalen des Patentanspruchs 8 gelöst.

Die Vorteile der erfindungsgemäßen Anlage stimmen sinngemäß mit den oben aufgeführten Vorteilen des erfindungsgemäßen Verfahrens überein.

Eine vorteilhafte Ausgestaltung der erfindungsgemäßen Anlage zeichnet sich dadurch aus, daß die Greifeinrichtung eine Mehrzahl von Greifern besitzt, die in einer Mehrzahl von parallelen Reihen eingeordnet sind, und daß die Spreizeinrichtung so ausgebildet ist, daß sie den Abstand zwischen den benachbarten Reihen von Greifern verändern kann. Daß und aus welchen Gründen eine solche Ausgestaltung vorteilhaft ist, wurde ebenfalls oben schon bei der Diskussion einer Verfahrensvariante angemerkt.

Die Spreizeinrichtung kann in diesem Falle umfassen:
a) mindestens ein angetriebenes Zugmittel, insbesondere einen Riemen, welches an einem Tragelement angreift, das eine seitliche Reihe von Greifern haltert;
b) mindestens eine Einrichtung, welche eine durch das Zugmittel hervorgerufene Seitwärtsbewegung des seitlichen Tragelements auf die die anderen Reihen von Greifern haltenden Tragelemente entsprechend umsetzt.

Diese Ausführungsform der Erfindung benötigt zum Herbeiführen des seitlichen Abstandes zwischen allen Reihen von Greifern noch eine einzige aktive Antriebseinrichtung, die direkt nur ein seitliches Tragelement bewegt. Die Bewegung dieses seitlichen Tragelementes wird dann, entsprechend den gewünschten Abständen zwischen den Reihen von Greifern, auf die anderen Tragelemente umgesetzt.

Die Einrichtung, welche die genannte Umsetzung der Bewegung des seitlichen Tragelementes in entsprechende Bewegungen der anderen Tragelemente umsetzt, kann vorteilhafterweise eine Nürnberger Schere sein, die der gesamten Anordnung eine ausreichende Stabilität verleiht. Ein Verkanten der Tragelemente gegenüber den Führungselementen, auf denen die Tragelemente verschoben werden können, ist damit weitgehend ausgeschlossen.

Die Greifer können druckluftbetätigte Flaschentulpengreifer sein, die einzeln und unabhängig voneinander betätigbar sind. Derartige Flaschentulpengreifer sind an und für sich bekannt und bewährt.

Die Greifer sind zweckmäßigerweise aus einer tieferen, ausgefahrenen Position gegen die Kraft einer Feder nach oben verschiebbar. Beim Aufsetzen der Greifeinrichtung auf die in den Kästen befindlichen Flaschen kann somit ein Teil der Greifer, entsprechend der Höhe der jeweils von diesen erfassten Flaschen, nach oben gedrückt werden, bis schließlich auch der letzte Greifer an der kleinsten Flasche angelangt ist und diese festhalten kann. Die vertikale Beweglichkeit der Greifer verhindert außerdem Beschädigungen, wenn sie bei ihrer Abwärtsbewegung auf ein Hindernis treffen.

Die die Kästen zuführende Fördereinrichtung kann beispielsweise ein Förderband sein.

Besonders bevorzugt wird, wenn die Greifeinrichtung von einem Wagen einer Elektrohängebahn getragen wird. Die Elektrohängebahn ermöglicht in besonders günstiger Weise den Zugriff auf die in den Kästen befindlichen Flaschen von oben sowie deren Herausheben und Weitertransport zu den verschiedenen Sortierflächen.

Die Greifeinrichtung kann dabei von einer an dem Wagen vorgesehenen Hubvorrichtung in vertikaler Richtung verfahrbar sein. Bei dieser Ausgestaltung werden also nicht die einzelnen Greifer, sondern die gesamte, alle Greifer umfassende Greifeinrichtung zum Herausheben der Flaschen aus den Kästen vertikal verfahren.

Die Kamerastation sollte mindestens ebenso viele stationär angeordnete Kameras aufweisen wie es Reihen von Greifern an der Greifeinrichtung gibt. Jeder derartigen Reihe von Greifern ist also mindestens eine Kamera zugeordnet.

Vorteilhaft ist weiter, wenn die Sortierflächen, auf denen die sortierten Flaschen typgerecht abgelegt werden, Sortierförderer sind. Die abgelegten Flaschen können auf diesen Sortierförderern kontinuierlich in einen größeren Sammelbehälter abgeführt werden.

Schließlich sollte aus Gründen, die oben ebenfalls schon erwähnt wurden, eine Ablagefläche, die ggfs. auch ein Behälterboden sein kann, vorgesehen sein, auf der nicht erkannte und/oder beschädigte Flaschen abgelegt werden können.

Ein Ausführungsbeispiel der Erfindung wird nachfolgend anhand der Zeichnung näher erläutert; es zeigen
- Figur 1: schematisch das Layout einer Anlage zum Sortieren von Flaschen;
- Figur 2: in der Sicht senkrecht zu seiner Bewegungsrichtung einen Wagen einer Elektrohängebahn mit Greifeinrichtung, der in der Anlage der Figur 1 Verwendung findet;
- Figur 3: eine Ansicht des Wagens der Elektrohängebahn in Bewegungsrichtung gesehen;
- Figur 4: eine perspektivische, vereinfachte Ansicht der Greifeinrichtung;
- Figur 5: eine weitere perspektivische Ansicht der Greifeinrichtung, aus einer anderen Richtung gesehen;
- Figur 6: schematisch eine Ansicht der Greifeinrichtung, in Bewegungsrichtung gesehen in einer ersten Funktionsstellung;
- Figur 7: die Greifeinrichtung der Figur 6 in einer anderen Funktionsstellung.

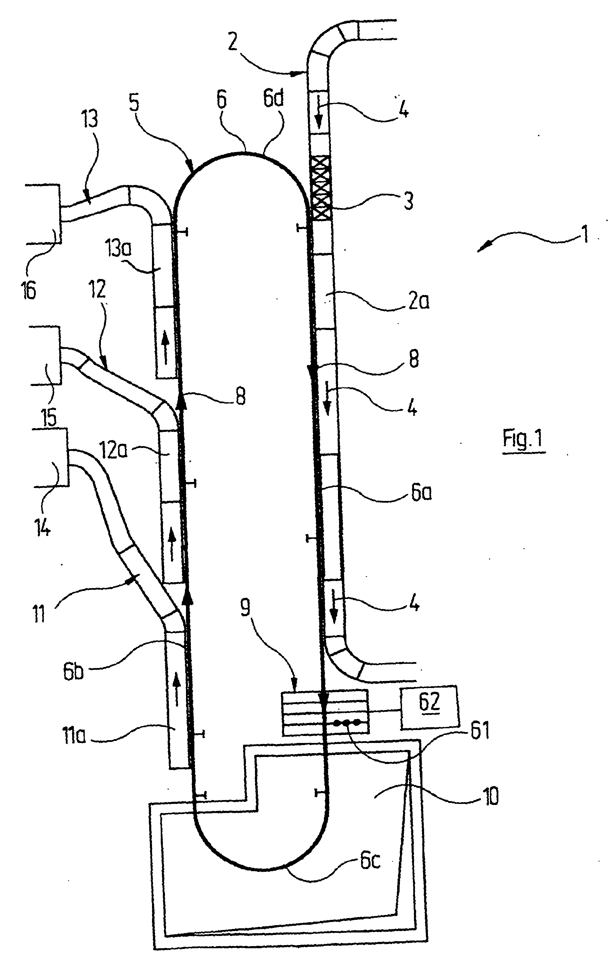

Der grobe Aufbau einer Flaschensortieranlage, die insgesamt mit dem Bezugszeichen 1 gekennzeichnet ist, läßt sich dem in Figur 1 dargestellten Layout entnehmen. Die Anlage 1 umfasst einen Kastenförderer 2 in Form eines Förderbandes, der von einer nicht dargestellten Aufgabestation her Rückgabeflaschen enthaltende Kästen 3 dem dargestellten Ausschnitt der Anlage 1 zuführt. Die Bewegungsrichtung der Kästen 3 ist in Figur 1 durch Pfeile 4 dargestellt. Beim dargestellten Ausführungsbeispiel hat jeder Kasten 3 dasselbe Gefache, in dem eine bestimme Anzahl von Flaschen aufgenommen werden kann. Die Flaschen sind unsortiert, stammen also von unterschiedlichen Abfüllern, sind teilweise beschädigt und sollen in der Anlage 1 zur Wiederverwendung bzw. Entsorgung sortiert und auf Beschädigungen geprüft werden.

Der Kastenförderer 3 besitzt eine geradlinige Wegstrecke 2a, auf welcher die Kästen 3 in Pulks von jeweils fünf Kästen 3 mit einer im wesentlichen konstanten Geschwindigkeit bewegt werden. Auf dieser Wegstrecke 2a werden die einzelnen Flaschen, wie weiter unten beschrieben wird, den Kästen 3 entnommen. Am Ende der geradlinigen Wegstrecke 2a biegt der Kastenförderer 2 wieder ab und führt in einen nicht dargestellten Bereich der Anlage 1, in welchem die nunmehr leeren Kästen 3 abgenommen und neue, mit Flaschen gefüllte Kästen 3 aufgenommen oder die leeren Kästen 3 direkt mit unsortierten Flaschen befüllt werden können. Insgesamt ist also der Kastenförderer 2 im Kreislauf geführt.

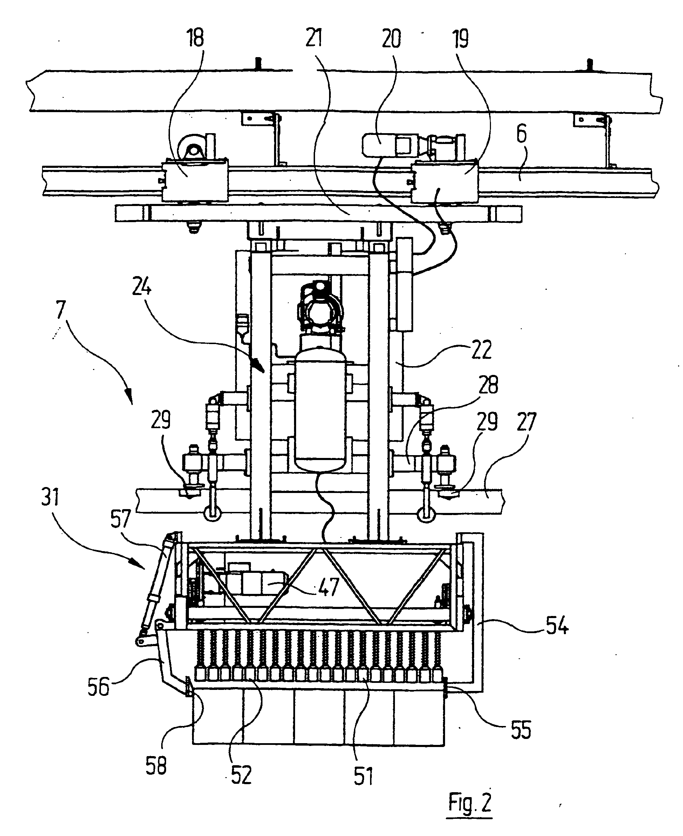

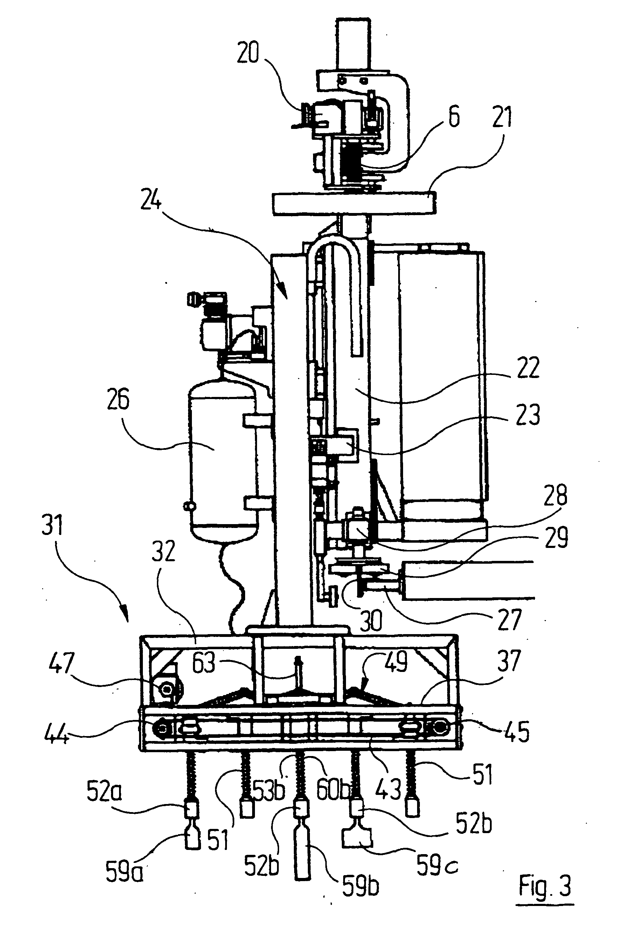

Die Anlage 1 umfasst außerdem eine Elektrohängebahn 5, deren Schiene 6 ebenfalls im Kreislauf geführt ist. Dazu sind zwei parallele, geradlinige Trums 6a, 6b der Schiene 6 über zwei halbkreisförmige Verbindungsbögen 6b, 6c miteinander verbunden. Auf der Schiene 6 ist eine Mehrzahl von Wägen 7 verfahrbar, die weiter unten anhand der Figuren 2 und 3 näher beschrieben werden. Eines der beiden geradlinigen Trums 6a der Schiene 6 der Elektrohängebahn 5 verläuft nahe bei der linearen Bewegungswegstrecke 2a des Kastenförderers 2 derart, daß sich die Wägen 7 der Elektrohängebahn 5 im wesentlichen oberhalb des Kastenförderers 2 bewegen. Die Bewegungsgeschwindigkeit der Wägen 7 der Elektrohängebahn 5 ist mit der Bewegungsgeschwindigkeit der Kästen 3 auf dem Kastenförderer 2 synchronisiert.

In Bewegungsrichtung der Wägen 7 der Elektrohängebahn 5 (Pfeile 8) gesehen hinter der geradlinigen Bewegungsstrecke 2a des Kastenförderers 2 befindet sich noch innerhalb des linearen Trums 6a der Schiene 6 eine Kamerastation 9, deren Funktion weiter unten erläutert wird und die in einer Richtung senkrecht zur Bewegungsrichtung 8 ein Array von äquidistanten CCD-Kameras 61 umfasst. Dieses Array von CCD-Kameras 61 ist stationär angordnet.

Die Kamerastation 9 ist über eine Signalleitung mit einer Bilderkennungseinrichtung 62 verbunden, auf deren Arbeitsweise ebenefalls esrt weiter unten eingegangen wird.

Die Schiene 6 der Elektrohängebahn 5 führt sodann über einen Flaschenabwurfbehälter 10, besitzt über diesem seinen einen Umlenkbogen 6c und setzt dann entlang des zweiten geradlinigen Trums 6b ihren Verlauf fort. Die Bewegungsrichtung der Wägen 7 ist dort derjenigen auf dem Trum 6a entgegengesetzt ist. Entlang des Trums 6b der Schiene 6 sind drei Flaschensortierförderer 11, 12, 13 angeordnet. Jeder dieser Flaschensortierförderer 11, 12, 13 besitzt eine Bewegungswegstrecke 11a, 12a, 13a, die sich parallel zum benachbarten Trum 6b der Schiene 6 der Elektrohängebahn 5, in engem Abstand zu diesem, befindet. Erneut ist die Anordnung so, daß sich die Wägen 7, die sich entlang des Trums 6b der Schiene 6 bewegen, im wesentlichen oberhalb der geradlinigen Bewegungswegstrecken 11a, 12a, 13a befinden.

An die linearen Bewegungswegstrecken 11a, 12a, 13a der Flaschensortierförderer 11, 12, 13 schließt sich jeweils ein Übergabeförderer 11b, 12b, 13b an, der zu einem Flaschenablagebehälter 14, 15 bzw. 16 führt.

Nach dem Durchlaufen des geradlinigen Trums 6b kehrt die Schiene 6 der Elektrohängebahn 5 über den in Figur 1 oberen Umlenkbogen 6b wieder zu dem in Figur 1 rechts liegenden geradlinigen Trum 6a zurück, wodurch der Kreislauf geschlossen ist.

Wie bereits erwähnt, läuft auf der Schiene 6 der Elektrohängebahn 5 eine Vielzahl von Wägen 7, die jeweils eine Greifeinrichtung 17 tragen. Die Greifeinrichtung 17 wird weiter unten näher beschrieben. Zunächst erfolgt eine kurze Erläuterung der Bauweise der Wägen 7 anhand der Figuren 2 und 3.

In den Figuren 2 und 3 ist zunächst die Schiene 6 der Elektrohängebahn 5 zu erkennen, an welcher die verschiedenen Wägen 7 der Elektrohängebahn 5 hängend verfahren werden können. Entlang dieser Schiene 6 verlaufen eine nicht dargestellte Stromschiene, über welche den Wägen 7 elektrische Energie zugeführt werden kann, sowie elektrische Steuerleitungen, über welche die Wägen 7 mit einer zentralen Steuerung der Anlage 1 kommunizieren.

Die Wägen 7 der Elektrohängebahn 5 umfassen in bekannter Art zwei Fahrwerke 18, 19, die mit der Schiene 6 zusammenwirken und hierzu geeignete, nicht näher dargestellte Führungseinrichtungen besitzen. Eines der Fahrwerke, nämlich das Fahrwerk 19, ist durch einen mitgeführten Elektromotor 20 antreibbar, der seinerseits über einen Stromabnehmer die erforderliche elektrische Energie von der parallel zur Schiene 6 laufenden Stromschiene und in gleicher Weise die erforderlichen Steuersignale erhält.

Die beiden Fahrwerke 18, 19 sind durch eine Traverse 21 miteinander verbunden, von welcher aus sich vertikal nach unten eine Tragrahmen 22 erstreckt. An dem Tragrahmen 22 ist, vertikal durch Rollen 23 (vgl. Figur 3) geführt, ein Hubschlitten 24 verfahrbar angeordnet, der durch eine geeignete, in der Zeichnung im einzelnen nicht erkennbare Antriebseinrichtung nach oben und unten bewegt werden kann. An der in Figur 3 linken Seitenfläche des Hubschlittens 24 sind ein Luftkompressor 25 und ein von diesem beschickter Drucklufttank 26 befestigt, deren Funktion weiter unten deutlich wird.

Drehmomente, die von dem Wagen 7 aufgrund seiner Gewichtskraft gegenüber seiner Aufhängung an der Schiene 6 ausgeübt werden, werden von einer Abstützschiene 27 aufgefangen, die sich unterhalb der Schiene 6, parallel zu dieser und etwas seitlich versetzt (vgl. Figur 3) erstreckt. Hierzu weist der Tragrahmen 22 eine Quertraverse 28 auf, an deren gegenüberliegenden Enden jeweils ein Rollenpaar 29 um eine vertikale Achse verdrehbar gelagert ist. Die Rollen 29 jeden Paares laufen jeweils auf gegenüberliegenden Flächen eines mit der Abstützschiene 27 verbundenen flachen Führungsgliedes 30 ab.

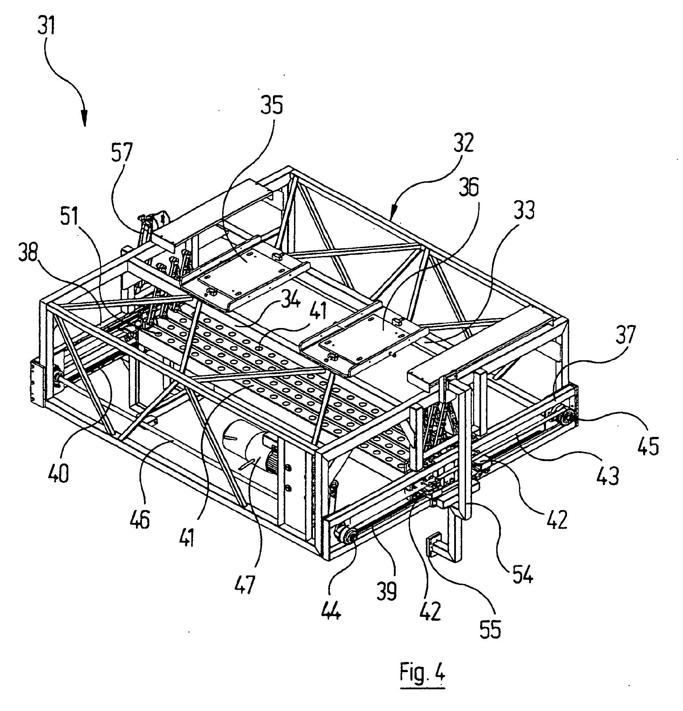

Der Hubschlitten 24 besitzt eine im wesentlichen U-förmige Tragstruktur. An den unteren Enden der beiden vertikalen Schenkel dieser Tragstruktur ist eine insgesamt mit dem Bezugszeichen 31 gekennzeichnende Greifeinrichtung befestigt. Deren genauer Aufbau ist den Figuren 4 bis 7 zu entnehmen, auf welche nunmehr Bezug genommen wird.

Die Greifeinrichtung 31 umfasst einen Tragrahmen 32, der im wesentlichen die Form eines Quaders besitzt, dessen Kanten von einzelnen Streben gebildet werden. Die von diesen Streben aufgespannten Flächen sind teilweise durch schräg verlaufende Streben 33 versteift, wie dies der Zeichnung zu entnehmen ist.

An der rechteckigen Oberseite der Tragstruktur 32 verlaufen jeweils in Richtung der längeren Rechteckseiten parallel zwei Tragstreben 33, 34, deren gegenüberliegende Enden jeweils an den die kürzeren Seiten des Rechteckes bildenden Streben befestigt sind. Der Zwischenraum zwischen den beiden Tragstreben 33, 34 wird durch zwei in Abstand voneinander befindliche Tragplatten 35, 36 überbrückt, an denen die unteren Schenkel des Hubschlitten 24 befestigt werden können.

Im unteren Bereich der gegenüberliegenden senkrecht zur Bewegungsrichtung des Wagens 7 verlaufenden vertikalen Seitenflächen des Tragrahmens 32 ist jeweils ein Unterrahmen 37, 38 befestigt. An den unteren horizontalen Streben der beiden Unterrahmen 37, 38 ist eine Führungsschiene 39, 40 angebracht. In diesen Führungsschienen 39, 40 verlaufen die Führungsschuhe 42 von insgesamt fünf U-förmigen Tragprofilen 42, die sich über die Längserstrekkung des Tragrahmens 32 parallel zur Bewegungsrichtung des Wagens 7 von der einen Führungsschiene 39 zu der anderen Führungsschiene 40 erstrecken. Die Anordnung ist also so, daß die Tragprofile 41 auf den Führungsschienen 39, 40 senkrecht zur Bewegungsrichtung des Wagens 7 verfahrbar sind, dabei aber ihre Ausrichtung parallel zu der Bewegungsrichtung des Wagens 7 beibehalten .

Um dies zu bewirken, sind an den gegenüberliegenden Führungsschuhen 42 des einen äußeren Tragprofils 41 jeweils die beiden Enden eines Riemens 43 festgeklemmt, der über zwei seitlich an dem jeweils zugehörigen Unterrahmen 37, 38 gelagerte Umlenkrollen 44, 45 geführt ist.

Eine der beiden Umlenkrollen 44, 45 auf beiden Stirnseiten der Greifeinrichtung 31, im vorliegenden Falle die Umlenkrolle 44, ist angetrieben. Dies geschieht mit Hilfe eines Elektromotors 47, der im Innenraum der quaderförmigen Tragstruktur 32 angeordnet und über einen Riemen 48 eine Welle 46 antreibt, welche die beiden gegenüberliegenden Umlenkrollen 44 an den beiden Unterrahmen 37, 38 miteinander verbindet.

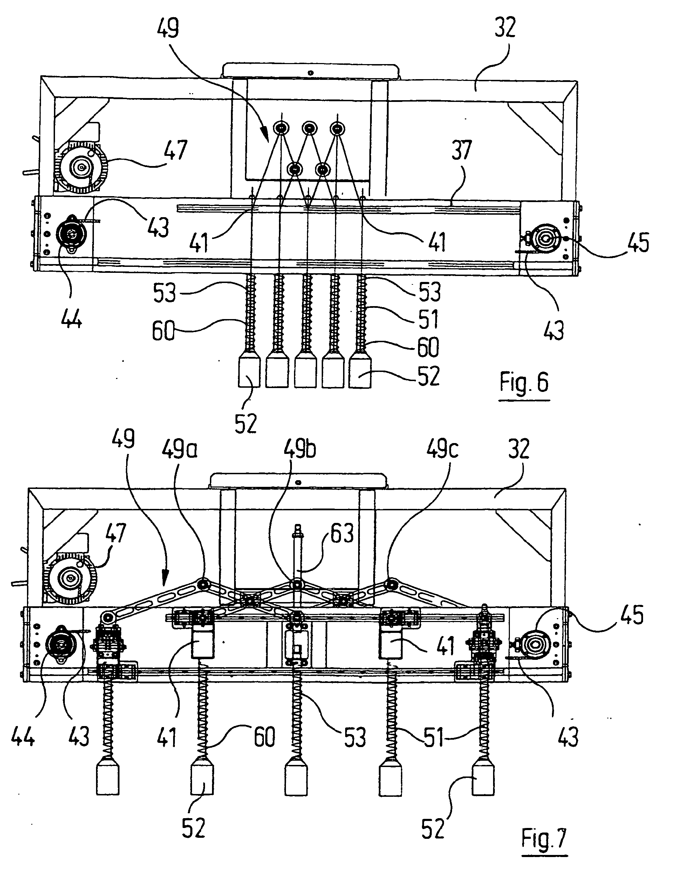

Die fünf Tragprofile 41 sind außerdem an ihren gegenüberliegenden Enden jeweils durch eine Nürnberger Schere 49 miteinander verbunden. Diese Nürnberger Schere 49 umfasst, wie sich insbesondere den Figuren 6 und 7 entnehmen läßt, drei V-förmige Glieder 49a, 49b, 49c, die jeweils zwei Schenkel umfassen. Diese sind an ihren oberen Enden gelenkig miteinander verbunden, so daß sie, von der Seite gesehen, die Form eines Daches bilden, wobei der Winkel am "Dachfirst" variabel ist. Die unteren Enden der Schenkel der Glieder 49a bis 49c der Nürnberger Schere 49 sind jeweils mit einem Tragprofil 41 gelenkig verbunden, wobei die Anordnung so ist, daß dasselbe Glied 49a bis 49c ein zwischenliegendes Tragprofil 41 überspannt, sich also mit seinem "Dachfirst" frei über diesem befindet. An diesem zwischenliegenden Tragprofil 41 greift gelenkig das Ende eines Schenkels des benachbarten Gliedes 49a bis 49c der Nürnberger Schere 49 an. An ihrem "Kreuzungspunkt" sind die Schenkel der jeweils benachbarten Glieder 49a bis 49c ebenfalls gelenkig verbunden.

Dieser Aufbau einer Nürnberger Schere 49 ist als solcher bekannt. Er hat die Folge, daß sich die Nürnberger Schere 49 bei einer Auswärtsbewegung des einen äußeren Tragprofils 41 durch den Riemen 43 "längt", wobei sich der Abstand zwischen benachbarten Tragprofilen 41 gleichmäßig vergrößert, wie dies sich aus dem Vergleich der Figuren 6 und 7 ergibt.

Damit die Nürnberger Schere 49 und die Tragprofile 41 nicht insgesamt seitlich wegwandern, ist der "Dachfirst" des mittleren Scherenglieds 49b in einer Vertikalführung 63 geführt (vgl. Figuren 3 und 7).

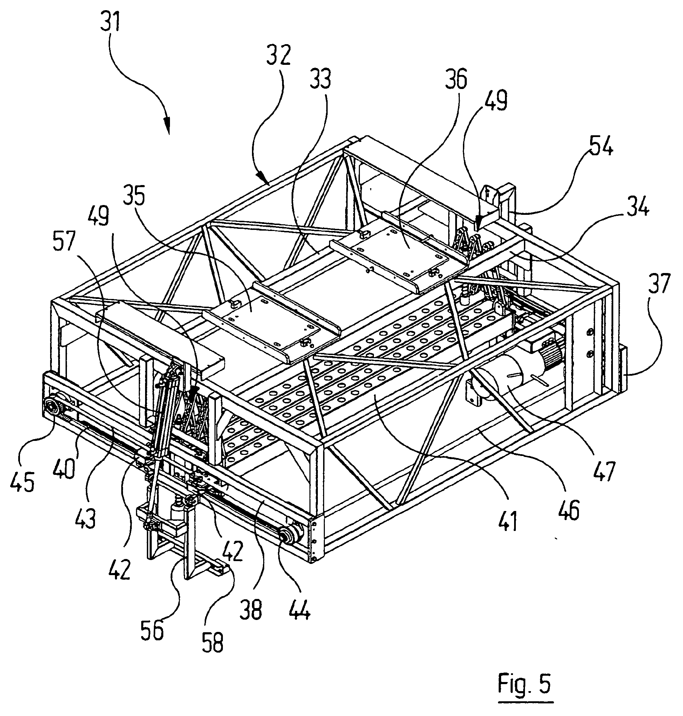

Die Basis der U-förmigen Tragprofile 41 ist mit einer Vielzahl äquidistanter Befestigungslöcher 50 versehen. In jedem dieser Befestigungslöcher 50 ist ein Flaschentulpengreifer 51 befestigt. In den perspektivischen Darstellungen der Figuren 4 und 5 sind diese Flaschentulpengreifer 51 aus Übersichtlichkeitsgründen weggelassen. Sie können jedoch besonders gut den Figuren 2, 3 sowie 6 und 7 entnommen werden.

Jeder Flaschentulpengreifer 51 umfasst einen Greifkopf 52 sowie eine Haltestange 53. Der Greifkopf 52 ist von bekannter Bauart. Wird er über einen Flaschenhals von oben gestülpt, kann er, von Druckluft beaufschlagt, diesen Flaschenhals festhalten. Die Haltestange 53 ist in dem entsprechenden Befestigungsloch des zugehörigen Tragprofiles 41 in axialer Richtung verschiebbar gehalten. Eine die Haltestange 53 umgebende Druckfeder 60 drückt den Greifkopf 52 jedes Flaschentulpengreifers 51 in die am weitesten unten liegende, durch einen geeigneten Anschlag definierte Position, wie sie in den Figuren 2, 3, 6 und 7 dargestellt ist.

Die Haltestangen 53 der einzelnen Flaschentulpengreifer 51 sind hohl und kommunizieren mit ihren Innenräumen jeweils mit einer Ventileinrichtung, die ihrerseits mit dem Drucklufttank 26 in Verbindung steht. Alle Ventileinrichtungen sind von einer Steuerung aus unabhängig voneinander betätigbar, so daß also jeder Greifkopf 52 der verschiedenen Flaschentulpengreifer 51 unabhängig von den anderen betätigt werden kann.

An einer senkrecht zur Bewegungsrichtung der Greifeinrichtung 31 verlaufenden Stirnfläche der Tragstruktur 32 ist, in Querrichtung etwa mittig, ein Anschlagarm 54 unbeweglich befestigt, der an seinem unteren Ende eine vertikal senkrecht zur Bewegungsrichtung verlaufende Anschlagplatte 55 aufweist. An der gegenüberliegenden Stirnseite der Tragstruktur 32 der Greifeinrichtung 31 ist ein beweglicher Anschlag 56 angelenkt, der mit Hilfe eines von der Tragstruktur 32 gehaltenen Pneumatikzylinders 57 um seinen Anlenkpunkt an der Tragstruktur 32 verschwenkt werden kann. Der bewegliche Anschlag 56 trägt an seinem unteren Ende eine Anschlagleiste 58.

Die bereits oben angesprochene Kamerastation 9 umfasst ebenso viele CCD-Kameras 62, wie es Reihen von Flaschentulpengreifern 51 in der Greifeinrichtung 31 gibt, also beim dargestellten Ausführungsbeispiel fünf. Diese CCD-Kameras 51 sind nebeneinander (senkrecht zum Verlauf der Schiene 6 gesehen) in einem solchen Abstand voneinander fest montiert, daß zwischen ihnen jeweils eine Reihe von Tulpengreifern 51 mit angehängter Flasche passieren kann.

Die oben beschriebene Flaschensortieranlage 1 arbeitet unter ihrer zentralen Steuerung wie folgt:
Die mit unsortierten Flaschen bestückten Kästen 3 wandern dem in Figur 1 dargestellten Ausschnitt der Anlage 1 über den Kastenförderer 2 zu und biegen in die geradlinige Wegstrecke 2a mit konstanter Geschwindigkeit ein. Sie werden auf dieser Wegstrecke 2a zunächst zu den oben schon erwähnten Pulks zusamengefasst, die beim dargestellten Ausführungsbeispiel jeweils fünf Kästen 3 enthalten. Die in jedem Kasten 3 enthaltenen Flaschen rühren von unterschiedlichen Herstellern bzw. Abfüllern und sind teilweise auch beschädigt und haben daher insbesondere in der Seitenansicht teilweise unterschiedliche Gestalt.

Wenn der Pulk von Kästen 3 auf der geradlinige Wegstrecke 2a des Kastenförderers 2 weiter fährt, nähert sich ihm ein Wagen 7 der Elektrohängebahn 5 auf dem Umlenkbogen 6d der Schiene 6. Die Greifeinrichtung 31 dieses Wagens 7 wird oberhalb des Pulks von Kästen 3 positioniert. Sodann wird der Hubschlitten 24 des Wagens 7 abgesenkt, wobei zunächst der bewegliche Anschlag 56 noch abgeklappt ist. Diese anfängliche Absenkbewegung geschieht so weit, bis sich die Anschlagplatte 55 des starr angebrachten Anschlagarmes 54 in Höhe des oberen Bereichs einer Seitenfläche des letzten Kastens 3 im Pulk befindet. Sodann wird mit Hilfe des Pneumatikzylinders 57 der bewegliche Anschlag 56 eingeklappt, wobei dessen Anschlagleiste 58 gegen die entsprechende Seitenfläche des ersten Kastens 3 im Pulk zu liegen kommt. Bei der Weiterverschwenkung des beweglichen Anschlags 56 werden die Kästen 3 im Pulk gegeneinander und der Pulk insgesamt gegen die Anschlagplatte 55 des starr befestigten Anschlagarmes 54 gedrückt. Auf diese Weise wird das Gefache innerhalb der Kästen 3 und damit die Position der in diesen befindlichen Flaschenhälse auf die Tulpengreifer 51 ausgerichtet.

Nunmehr kann durch ein weiteres Absenken des Hubschlittens 24 jeder Greiferkopf 52 über einen entsprechenden Flaschenhals gestülpt werden.

Da die Flaschen 59, wie insbesondere der Figur 3 zu entnehmen ist, unterschiedliche Höhen besitzen können, stoßen die Greiferköpfe 52 an unterschiedlichen Stellen der Abwärtsbewegung des Hubschlittens 24 auf den entsprechenden Flaschenhals. In Figur 3 ist beispielsweise die mittlere Flasche 59b am höchsten; ihr Flaschenhals steht daher innerhalb der Kästen 3 des Pulkes an höchster Stelle. Dieser Flaschenhals kommt daher schon zu einem Zeitpunkt der Abwärtsbewegung der Greifeinrichtung 31 in Eingriff mit dem entsprechenden Greifkopf 52b, an welcher zwischen den Greifköpfen 52a und 52c, die weniger hohen Flaschen 59a und 59c so geordnet sind, und den entsprechenden Flaschenhälsne noch keine Berührung besteht. Bei der weiteren Absenkbewegung des Hubschlittens 24 wird daher der Greifkopf 52b nach oben gedrückt, wobei sich die entsprechende Haltestange 53b axial nach oben bewegt und die zugehörige Druckfeder 60b komprimiert wird. Dieser Vorgang wiederholt sich nacheinander für alle Flaschen 59, bis auch der Flaschenhals der niedrigsten Flasche 59c von einem Greifkopf 52c eines Flaschentulpengreifers 51 erfasst ist.

Sodann werden alle Greifköpfe 52 mit Druckluft beaufschlagt, so daß sie die entsprechenden Flaschen 59 festhalten können. Nunmehr wird der Hubschlitten 24 wieder nach oben gefahren, wobei alle Flaschen 59 aus den Kästen 3 des Pulkes herausgehoben werden. Die jetzt leeren Kästen 3 fahren auf dem Kastenförderer 2 aus dem dargestellten Anlagenabschnitt heraus, um, wie oben schon kurz beschrieben, erneut mit unsortierten Flaschen bestückt zu werden.

All die oben beschriebenen Vorgänge finden während einer kontinuierlichen, synchronisierten, mit konstanter Geschwindigkeit ablaufenden Fahrt des Wagens 7 der Elektrohängebahn 5 und des Pulks von Kästen 3 auf dem Kastenförderer 2 statt. Während die leeren Kästen 3 über eine Biegung des Kastenförderers 2 aus dem in Figur 1 dargestellten Ausschnitt der Anlage 1 entfernt werden, setzt der Wagen 7 mit den von der Greifeinrichtung 31 erfassten Flaschen 59 seine Fahrt mit gleicher Geschwindigkeit und geradlinig fort.

Nunmehr wird, noch bevor die Kamerastation 9 erreicht ist, der Elektromotor 47 innerhalb der Greifeinrichtung 31 in Gang gesetzt. Die angetriebenen Umlenkrollen 44 ziehen nunmehr über die Riemen 43 die Tragprofile 41 auf den Führungsschienen 42 auseinander. Dabei sorgen die Nürnberger Scheren 49 an den gegenüberliegenden Enden der Tragprofile 41 dafür, daß die Abstände zwischen den Tragprofilen 41 und damit zwischen den Reihen von Flaschentulpengreifern 51 vergrößert werden. Die Flaschentulpengreifer 51 bewegen sich also aus der in Figur 6 dargestellten Position in die in Figur 7 dargestellte Position. In dieser ist der Abstand zwischen den von den Flaschentulpengreifern 51 gehaltenen Reihen von Flaschen 59 so groß, daß zwischen ihnen jeweils eine CCD-Kamera 61 der Kamerastation 9 Platz hat. Bei der Weiterbewegung des Wagens 7 werden nunmehr also die Flaschen 59 alle so an einer CCD-Kamera 61 vorbeigeführt, daß sie von der Seite her betrachtet werden können.

Diese Seitenansicht bietet eine Fülle von Informationen, an denen die Flaschen 59 erkannt werden können. Alle CCD-Kameras 61 der Kamerastation 59 sind mit derer Bilderkennungseinrichtung 62 verbunden, in der von den wichtigsten auftretenden Flaschentypen die charakteristischen Seitenansichten abgespeichert sind. Nach dem Durchlauf der Kamerastation 9 ist also von jeder Flasche 59, die von der Greifeinrichtung 31 mitgeführt ist, bekannt, ob sie einem abgespeicherten Flaschentyp entspricht und gegebenenfalls welchem. Außerdem kennt die zentrale Steuerung die Position aller Flaschen 59 innerhalb der Greifeinrichtung 31.

Bei der Weiterbewegung des Wagens 7, der nunmehr über den Abwurfbehälter 10 und dann in den Umlenkbogen 6c der Schiene 6 gelangt, werden nunmehr all diejenigen Flaschentulpengreifer 51 deaktiviert, die eine nicht erkannte Flasche 59 tragen, so daß sie die nicht erkannten Flaschen 59 oberhalb des Abwurfbehälters 10 los und in diesen Abwurfbehälter 10 fallen lassen. Bei diesen Flaschen 59 kann es sich sowohl um nicht erkannte, unbeschädigte Flaschen von unbekannten Herstellern oder Abfüllern oder um beschädigte Flaschen handeln. Die in dem Abwurfbehälter 10 gesammelten Flaschen 59 werden in geeigneter Weise entsorgt.

Bei der Weiterbewegung des Wagens 7 geraten die noch von der Greifeinrichtung 31 getragenen Flaschen 59, die alle als zu einem bestimmten Typ gehörig erkannt wurden, über die geradlinige Wegstrecke 11a des Sortierförderers 11. Dieser Sortierförderer 11 ist einem bestimmten Flaschentyp zugeordnet. Die Greifeinrichtung 31 des Wagens bewegt sich nunmehr über diesen Abschnitt 11a des Sortierbandes 11, der sich mit derselben linearen Geschwindigkeit wie der Wagen 7 bewegt. Die Greifeinrichtung 31 wird mit Hilfe des Hubschlittens 24 abgesenkt. Dabei werden die Flaschen 59 auf das Sortierband 11 abgestellt. Die Absenkbewegung erfolgt soweit, bis alle Flaschen 59 mit ihrer Unterseite auf dem Sortierband 11a aufstehen. Sodann werden diejenigen Flaschentulpengreifer 51 deaktiviert, deren zugehörige Flaschen 59 zuvor in der Kamerastation 9 als dem entsprechenden Flaschentyp zugehörig erkannt worden sind. Bei einer sich anschließenden Aufwärtsbewegung der Greifeinrichtung 31, die mit dem Hubschlitten 24 bewirkt wird, bleiben also die diesem Flaschentyp entsprechenden Flaschen 59 auf dem Sortierförderer 11 stehen und werden dem entsprechenden Flaschenablagebehälter 14 zugeführt.

Dieser Vorgang wiederholt sich, stets unter Beibehaltung einer konstanten Geschwindigkeit des Wagens 7, an den Sortierbändern 12 und 13. Wenn der Wagen 7 das geradlinige Trum 6b der Schiene 6 in den Umlenkbogen 6b verläßt, sind alle Flaschen 59 abgestellt und alle Flaschentulpengreifer 51 der Greifeinrichtung 31 sind wieder frei, so daß nach dem Durchlaufen der Umlenkbogens 6d neue Flaschen 59 aus einem neuen Pulk von Kästen 3 aufgenommen werden können.

Bei der obigen Beschreibung wurde nur der Weg eines einzigen Wagens 7 verfolgt. Es ist selbstverständlich, daß sich tatsächlich mehrere derartige Wägen 7, in Abstand voneinander, auf dem durch die Schiene 6 vorgegebenen Kreislaufsystem bewegen. Auch können natürlich mehr als nur drei Sortierbänder vorhanden sein.

## Patentansprüche

1. Verfahren zum Sortieren von Flaschen, bei dem
a) unsortierte Flaschen (59) in Kästen (3) zugeführt werden;
b) der Typ der Flaschen (59) in den Kästen (3) mit Hilfe mindestens einer Kamera (61) und einer Bilderkennungseinrichtung (62) bestimmt wird;
c) die Flaschen (59) aus den Kästen (3) entnommen werden; wobei
d) die Flaschen (59) nach der Entnahme aus den Kästen (3) auf einen solchen seitlichen Abstand voneinander gebracht werden, dass zwischen ihnen mindestens eine Kamera (61) Platz findet;
e) die Kamera (61) die Flaschen (59) von der Seite her betrachtet,
**dadurch gekennzeichnet, dass** die Flaschen (59)
f) nach der Entnahme aus den Kästen (3) kontinuierlich in einer eine geschlossene Kurve (6a, 6b, 6c, 6d) bildenden Elektrohängebahn (5) bewegt werden, und,
g) sortiert nach Flaschentyp, auf einer Mehrzahl von Sortierflächen (11, 12, 13) abgelegt werden.

2. Verfahren nach Anspruch 1, **dadurch gekennzeichnet,**
**dass** die Flaschen (59) den Kästen (3) in Reihen entnommen werden und die Reihen von Flaschen (59) auf den erforderlichen Abstand gespreizt werden und dann in jedem Zwischenraum zwischen zwei Reihen von Flaschen (59) mindestens eine Kamera (61) positioniert wird.

3. Verfahren nach Anspruch 1 oder 2, **dadurch gekennzeichnet, dass** die mindestens eine Kamera (61) beim Vorbeiführen der Flaschen (59) stillsteht.

4. Verfahren nach einem der Ansprüche 1 bis 3, **dadurch**
**gekennzeichnet, dass** die von der Bilderkennungseinrichtung (62) nicht erkannten oder beschädigten Flaschen (59) einer besonderen Ablagefäche (10) zugeführt werden.

5. Verfahren nach einem der vorhergehenden Ansprüche,
**dadurch gekennzeichnet, dass** die Flaschen (59) während der Herstellung des notwendigen Abstandes zwischen ihnen und während der Betrachtung durch die mindestens eine Kamera (61) kontinuierlich in einer Förderrichtung (8) bewegt werden.

6. Verfahren nach einem der Ansprüche 2 bis 5, **dadurch**
**gekennzeichnet, dass** mindestens zwei Reihen von Flaschen (59) gebildet werden, die an mindestens zwei stationären Kameras (61) vorbeigeführt werden.

7. Verfahren nach einem der vorhergehenden Ansprüche,
**dadurch gekennzeichnet, dass** vor der Entnahme der Flaschen (59) die Kästen (3) zu Pulks zusammengesetzt werden, die jeweils eine Mehrzahl von Kästen (3) enthalten.

8. Anlage zum Sortieren von Flaschen mit
a) einer Fördereinrichtung (2), mit welcher Kästen (3), die unsortierte Flaschen (59) enthalten, zugeführt werden können;
b) einer Kamerastation (9), die mindestens eine Kamera (61) enthält und mit welcher die Gestalt jeder Flasche zumindest teilweise erfasst werden kann;
c) einer Bilderkennungseinrichtung (62), mit welcher die von der Kamerastation (9) erfassten Bilder bestimmten Typen von Flaschen (59) zugeordnet werden können;
d) einer Greifeinrichtung (31), mit welcher die unsortierten Flaschen (59) aus den Kästen (3) herausgehoben werden können;
wobei
e) die Greifeinrichtung (31) eine Spreizeinrichtung (43 bis 49) aufweist, die so ausgebildet ist, dass sie die Flaschen (59) nach der Entnahme aus den Kästen (3) in einen solchen Abstand voneinander bringen kann, dass mindestens eine Kamera (61) zwischen ihnen positionierbar ist, die hierdurch in der Lage ist, die Flaschen (59) von einer seitlichen Richtung her zu betrachten,
**dadurch gekennzeichnet, dass**
f) eine eine geschlossene Kurve (6a, 6b, 6c, 6d) bildende Elektrohängebahn (5) vorgesehen ist, auf welcher die Flaschen (59) nach ihrer Entnahme aus den Kästen (3) bewegbar sind, sowie
g) Sortierflächen (11, 12, 13) vorgesehen sind, auf welchen die Flaschen (59), sortiert nach Flaschentyp, ablegbar sind.

9. Anlage nach Anspruch 8, **dadurch gekennzeichnet,**
**dass** die Greifeinrichtung (31) eine Mehrzahl von Greifern (51) besitzt, die in einer Mehrzahl von parallelen Reihen angeordnet sind, und dass die Spreizeinrichtung (43 bis 49) so ausgebildet ist, dass sie den Abstand zwischen den benachbarten Reihen von Greifern (51) verändern kann.

10. Anlage nach Anspruch 9, **dadurch gekennzeichnet,**
**dass** die Spreizeinrichtung (43 bis 49) umfasst:
a) mindestens ein angetriebenes Zugmittel, insbesondere einen Riemen (43), das an einem Tragelement (41) angreift, das eine seitliche Reihe von Greifern (51) haltert;
b) mindestens eine Einrichtung (49), welche eine durch das Zugmittel (43) hervorgerufene Seitwärtsbewegung des seitlichen Tragelements (41) auf die die anderen Reihen von Greifern (51) halternden Tragelemente (41) entsprechend umsetzt.

11. Anlage nach Anspruch 10, **dadurch gekennzeichnet, dass** die die Bewegungsumsetzung bewirkende Einrichtung (49) eine Nürnberger Schere ist.

12. Anlage nach einem der Ansprüche 8 bis 11, **dadurch gekennzeichnet, dass** die Greifer (51) druckluftbetätigte Flaschentulpengreifer sind, die einzeln und unabhängig voneinander betätigbar sind.

13. Anlage nach einem der Ansprüche 8 bis 12, **dadurch**
**gekennzeichnet, dass** die Greifer (51) aus einer tieferen, ausgefahrenen Position gegen die Kraft einer Feder (60) nach oben verschoben werden können.

14. Anlage nach einem der Ansprüche 8 bis 13, **dadurch**
**gekennzeichnet, dass** die die Kästen (3) zuführende Fördereinrichtung (2) ein Förderband ist.

15. Anlage nach einer der Ansprüche 8 bis 14, **dadurch**
**gekennzeichnet, dass** die Greifeinrichtung (31) von einem Wagen (7) der Elektrohängebahn (5) getragen wird.

16. Anlage nach Anspruch 15, **dadurch gekennzeichnet, dass**
die Greifeinrichtung (31) von einer an dem Wagen (7) vorgesehenen Hubvorrichtung (22, 24) in vertikaler Richtung verfahrbar ist.

17. Anlage nach einem der Ansprüche 8 bis 16, **dadurch**
**gekennzeichnet, dass** die Kamerastation (9) mindestens ebenso viele stationär angeordnete Kameras (61) aufweist, wie es Reihen von Greifern (51) an der Greifeinrichtung (31) gibt.

18. Anlage nach einem der Ansprüche 8 bis 17, **dadurch**
**gekennzeichnet, dass** die Sortierflächen (11, 12, 13), auf denen die sortierten Flaschen (59) typgerecht abgelegt werden, Sortierförderer sind.

19. Anlage nach einem der Ansprüche 8 bis 18, **dadurch**
**gekennzeichnet, dass** eine Ablagefläche (10) vorgesehen ist, auf der nicht erkannte und beschädigte Flaschen (59) abgelegt werden können.

## Claims

1. Method of sorting bottles, in which:
a) unsorted bottles (59) are fed in in crates (3);
b) the type of bottles (59) in the crates (3) is determined with the aid of at least one camera (61) and an image recognition apparatus (62);
c) the bottles (59) are removed from the crates (3);
wherein
d) after being removed from the crates (3), the bottles (59) are placed at a lateral distance from one another such that there is room for at least one camera (61) between them; and
e) the camera (61) views the bottles (59) from the side;
**characterised in that** the bottles (59),
f) after being removed from the crates (3), are moved continuously in a telpher line (5) forming a closed curve (6a, 6b, 6c, 6d), and
g) are deposited, in a manner sorted according to the type of bottle, on a plurality of sorting surfaces (11, 12, 13).

2. Method according to claim 1, **characterised in that** the bottles (59) are removed from the crates (3) in rows and the rows of bottles (59) are spread over the required distance and at least one camera (61) is then positioned in each intervening space between two rows of bottles (59).

3. Method according to claim 1 or 2, **characterised in that** the at least one camera (61) is stationary as the bottles (59) are conveyed past.

4. Method according to one of claims 1 to 3, **characterised in that** the bottles (59) which are not recognised by the image recognition apparatus (62) or are damaged are fed to a special depositing bay (10).

5. Method according to one of the preceding claims, **characterised in that** the bottles (59) are continuously moved in a direction of conveyance (8) while the necessary distance between them is being brought about and while they are being viewed by the at least one camera (61).

6. Method according to one of claims 2 to 5, **characterised in that** at least two rows of bottles (59) are formed, which are conveyed past at least two stationary cameras (61).

7. Method according to one of the preceding claims, **characterised in that**, prior to the removal of the bottles (59), the crates (3) are assembled to form groups which each contain a plurality of crates (3).

8. Installation for sorting bottles, said installation having:
a) a conveyor apparatus (2), by means of which crates (3) containing unsorted bottles (59) can be fed in;
b) a camera station (9), which contains at least one camera (61) and by means of which it is possible to detect, at least partially, the shape of each bottle;
c) an image recognition apparatus (62), by means of which the images detected by the camera station (9) can be associated with certain types of bottles (59) ;
d) a gripping apparatus (31), by means of which the unsorted bottles (59) can be lifted out of the crates (3);
wherein
e) the gripping apparatus (31) has a spreading apparatus (43 to 49) which is constructed in such a way that it is able to place the bottles (59), after their removal from the crates (3), at a distance from one another such that it is possible to position, between them, at least one camera (61), which is thereby in a position to view the bottles (59) from a lateral direction, **characterised in that**
f) a telpher line (5) forming a closed curve (6a, 6b, 6c, 6d) is provided, on which the bottles (59) can be moved after their removal from the crates (3) ; and
g) sorting surfaces (11, 12, 13) are provided, on which the bottles (59) can be deposited in a manner sorted according to the type of bottle.

9. Installation according to claim 8, **characterised in that** the gripping apparatus (31) possesses a plurality of grippers (51) which are arranged in a plurality of parallel rows, and that the spreading apparatus (43 to 49) is constructed in such a way that it is able to vary the distance between the adjacent rows of grippers (51).

10. Installation according to claim 9, **characterised in that** the spreading apparatus (43 to 49) comprises:
a) at least one driven traction means, particularly a belt (43), which acts on a carrying element (41) which holds a lateral row of grippers (51);
b) at least one apparatus (49) which transfers, in a suitable manner, a sideways movement of the lateral carrying element (41) generated by the traction means (43), to the carrying elements (41) holding the other rows of grippers (51).

11. Installation according to claim 10, **characterised in that** the apparatus (49) that gives rise to the transfer of movement is a lazy tongs-type device.

12. Installation according to one of claims 8 to 11, **characterised in that** the grippers (51) are compressed air-actuated tulip grippers for bottles, which can be actuated individually and independently of one another.

13. Installation according to one of claims 8 to 12, **characterised in that** the grippers (51) can be displaced upwards, against the force of a spring (60), from a lower, extended position.

14. Installation according to one of claims 8 to 13, **characterised in that** the conveyor apparatus (2) that feeds in the crates (3) is a conveyor belt.

15. Installation according to one of claims 8 to 14, **characterised in that** the gripping apparatus (31) is carried by a carriage (7) belonging to the telpher line (5).

16. Installation according to claim 15, **characterised in that** the gripping apparatus (31) can be moved in the vertical direction by a lifting device (22, 24) provided on the carriage (7).

17. Installation according to one of claims 8 to 16, **characterised in that** the camera station (9) has at least as many cameras (61), arranged in a stationary manner, as there are rows of grippers (51) on the gripping apparatus (31).

18. Installation according to one of claims 8 to 17, **characterised in that** the sorting surfaces (11, 12, 13) on which the sorted bottles (59) are deposited correctly according to type are sorting conveyors.

19. Installation according to one of claims 8 to 18, **characterised in that** a depositing surface (10) is provided, on which unrecognised and damaged bottles (59) can be deposited.

## Revendications

1. Procédé de tri de bouteilles, dans lequel
a) des bouteilles (59) non triées sont délivrées dans des caisses (3) ;
b) le type des bouteilles (59) est déterminé, dans les caisses (3), à l'aide d'au moins une caméra (61) et d'un dispositif (62) de reconnaissance d'images ;
c) lesdites bouteilles (59) sont prélevées desdites caisses (3) ;
sachant
d) qu'à l'issue du prélèvement hors desdites caisses (3), lesdites bouteilles (59) sont amenées à un espacement latéral mutuel tel qu'au moins une caméra (61) trouve place entre elles ;
e) que ladite caméra (61) observe lesdites bouteilles (59) par le côté,
**caractérisé par le fait que** les bouteilles (59)
f) sont animées d'un mouvement continu, à l'issue du prélèvement hors des caisses (3), sur une piste suspendue électrique (5) décrivant une courbe fermée (6a, 6b, 6c, 6d), et
g) sont déposées sur une pluralité de surfaces de triage (11, 12, 13), à l'état trié suivant le type de bouteilles.

2. Procédé selon la revendication 1, **caractérisé par le fait que** les bouteilles (59) sont prélevées hors des caisses (3) en des rangées, et les rangées de bouteilles (59) sont dispersées jusqu'à l'espacement requis, puis au moins une caméra (61) est placée dans chaque espace intermédiaire entre deux rangées de bouteilles (59).

3. Procédé selon la revendication 1 ou 2, **caractérisé par le fait que** la caméra (61), à présence minimale, est immobile lorsque les bouteilles (59) défilent en regard.

4. Procédé selon l'une des revendications 1 à 3, **caractérisé par le fait que** les bouteilles (59) détériorées, ou non identifiées par le dispositif (62) de reconnaissance d'images, sont dirigées vers une surface de remisage (10) particulière.

5. Procédé selon l'une des revendications précédentes, **caractérisé par le fait que** les bouteilles (59) sont animées d'un mouvement continu, dans une direction de convoyage (8), au cours de l'instauration de l'espacement nécessaire entre elles et au cours de l'observation par la caméra (61) à présence minimale.

6. Procédé selon l'une des revendications 2 à 5, **caractérisé par** la formation d'au moins deux rangées de bouteilles (59), déplacées en regard d'au moins deux caméras stationnaires (61).

7. Procédé selon l'une des revendications précédentes, **caractérisé par le fait qu'**avant le prélèvement des bouteilles (59), les caisses (3) sont regroupées en des lots renfermant, à chaque fois, une pluralité de caisses (3).

8. Installation de tri de bouteilles, comprenant
a) un dispositif de convoyage (2) permettant la délivrance de caisses (3) contenant des bouteilles (59) non triées ;
b) un poste (9) d'observation vidéo comportant au moins une caméra (61), et au moyen duquel la silhouette de chaque bouteille peut être au moins partiellement détectée ;
c) un dispositif (62) de reconnaissance d'images au moyen duquel les images, détectées par ledit poste (9) d'observation vidéo, peuvent être associées à des types de bouteilles (59) déterminés ;
d) un système de préhension (31) au moyen duquel lesdites bouteilles (59), non triées, peuvent être soulevées hors desdites caisses (3) ;
sachant que
e) ledit système de préhension (31) présente un dispositif de dispersion (43 à 49) réalisé de telle sorte qu'il puisse amener les bouteilles (59), à l'issue du prélèvement hors des caisses (3), à un espacement mutuel permettant de placer, entre lesdites bouteilles, au moins une caméra (61) se trouvant ainsi en mesure d'observer lesdites bouteilles (59) à partir d'une direction latérale,
**caractérisée par** la présence
f) d'une piste suspendue électrique (5) décrivant une courbe fermée (6a, 6b, 6c, 6d), et sur laquelle les bouteilles (59) peuvent être mises en mouvement à l'issue de leur prélèvement hors des caisses (3), ainsi que
g) de surfaces de triage (11, 12, 13), sur lesquelles lesdites bouteilles (59) peuvent être déposées à l'état trié suivant le type de bouteilles.

9. Installation selon la revendication 8, **caractérisée par le fait que** le système de préhension (31) offre une pluralité d'organes de préhension (51), agencés en une pluralité de rangées parallèles ; et **par le fait que** le dispositif de dispersion (43 à 49) est réalisé de manière à pouvoir modifier l'espacement entre les rangées d'organes de préhension (51) voisines.

10. Installation selon la revendication 9, **caractérisée par le fait que** le dispositif de dispersion (43 à 49) comprend :
a) au moins un moyen de traction entraîné, en particulier une courroie (43) en prise avec un élément de support (41) retenant une rangée latérale d'organes de préhension (51) ;
b) au moins un système (49) par lequel un mouvement de côté de l'élément latéral de support (41), provoqué par ledit moyen de traction (43), est répercuté de façon correspondante sur les éléments de support (41) retenant les autres rangées d'organes de préhension (51).

11. Installation selon la revendication 10, **caractérisée par le fait que** le système (49), provoquant la répercussion du mouvement, est une pince extensible.

12. Installation selon l'une des revendications 8 à 11, **caractérisée par le fait que** les organes de préhension (51) sont des préleveurs de bouteilles à tulipes, actionnés par de l'air comprimé, qui peuvent être manoeuvrés individuellement et indépendamment les uns des autres.

13. Installation selon l'une des revendications 8 à 12, **caractérisée par le fait que** les organes de préhension (51) peuvent être déplacés vers le haut, en opposition à la force d'un ressort (60), à partir d'un emplacement déployé occupant une position plus basse.

14. Installation selon l'une des revendications 8 à 13, **caractérisée par le fait que** le dispositif de convoyage (2), délivrant les caisses (3), est une bande convoyeuse.

15. Installation selon l'une des revendications 8 à 14, **caractérisée par le fait que** le système de préhension (31) est porté par un chariot (7) de la piste suspendue électrique (5).

16. Installation selon la revendication 15, **caractérisée par le fait que** le système de préhension (31) peut être déplacé, dans la direction verticale, par un dispositif de levage (22, 24) prévu sur le chariot (7).

17. Installation selon l'une des revendications 8 à 16, **caractérisée par le fait que** le poste (9) d'observation vidéo présente des caméras (61), à implantation stationnaire, dont le nombre est au moins égal à celui des rangées d'organes de préhension (51) situés sur le système de préhension (31).

18. Installation selon l'une des revendications 8 à 17, **caractérisée par le fait que** les surfaces de triage (11, 12, 13), sur lesquelles les bouteilles triées (59) sont déposées en adéquation avec leur type, sont des convoyeurs de triage.

19. Installation selon l'une des revendications 8 à 18, **caractérisée par** la présence d'une surface de remisage (10), sur laquelle des bouteilles (59) non identifiées et détériorées peuvent être déposées.
